# EUROPÄISCHE PATENTSCHRIFT

(11) **EP 1 583 644 B1**
(45) Veröffentlichungstag und Bekanntmachung des Hinweises auf die Patenterteilung: **07.03.2007**
(21) Anmeldenummer: 03785945.1
(22) Anmeldetag: 22.12.2003
(51) Int. Cl.: B29C 45/14, B29C 45/37

(54) **VERFAHREN ZUM HERSTELLEN VON HINTERSPRITZTEN KUNSTSTOFFFORMTEILEN**
METHOD FOR PRODUCING REAR-INJECTED PLASTIC MOULDED PARTS
PROCEDE DE FABRICATION DE CORPS MOULES PLASTIQUES PAR RETRO-INJECTION

(30) Priorität: 13.01.2003 DE 10301712
(43) Veröffentlichungstag der Anmeldung: 12.10.2005
(73) Patentinhaber: Faurecia Innenraum Systeme GmbH, 76767 Hagenbach (DE)
(72) Erfinder: MEDINA-GALARZA, Juan, 46220 Picassent (ES); VILARASAU-DURANY, Marta, 25600 Balaguer (ES)
(74) Vertreter: Pfenning, Meinig & Partner GbR
(86) Internationale Anmeldenummer: PCT/EP2003/014916
(87) Internationale Veröffentlichungsnummer: WO 2004/062877

(56) Entgegenhaltungen:
- EP-A- 0 890 424
- DE-A- 19 851 117
- US-A- 5 456 976
- US-A- 6 149 420

## Beschreibung

Die Erfindung betrifft ein Verfahren zum Herstellen von hinterspritzten Kunststoffteilen.

Aus der DE 197 29 780 C1 ist bereits ein Verfahren zum Herstellen von hinterspritzten Kunststoffformteilen mit dekorativ geprägter Oberflächenbeschichtung bekannt. Hierbei wird das Dekormaterial in ein Spritzgusswerkzeug eingelegt und das Dekormaterial dann bei geschlossenem Werkzeug mit einem Gas unter Druck beaufschlagt, so dass das Dekormaterial in die Kavitäten des Spritzgusswerkzeugs gedrückt wird. Anschließend erfolgt das Hinterspritzen des Dekormaterials mit einem Kunststoff, der nach dem Aushärten das Substrat des Formteils bildet. Das Dekormaterial kann vor dem Einlegen in das Spritzgusswerkzeug rückseitig mit einem porösen Vlies und/oder einer Folie belegt werden.

Weitere Verfahren zum Herstellen hinterspritzter Kunststoffteile sind aus DE-A-198 51 117 und aus US-A-5 456 976 bekannt.

Durch Hinterspritzen hergestellte Kunststoffformteile weisen häufig auch eine Schaumstoffschicht zwischen der Dekorschicht und dem Substrat auf.

Bekannte Verfahren haben den Nachteil, dass sie zwischen dem Einlegen des Dekormaterials und der Injektion des Substratmaterials den zusätzlichen Schritt der Druckbeaufschlagung mit einem Gas enthalten und daher aufwendig sind.

Es ist daher die Aufgabe der vorliegenden Erfindung, ein Verfahren zum Herstellen von hinterspritzten Kunststoffformteilen aus einer Dekorschicht, einer Schaumstoffschicht und einem Substrat, die jeweils aus Poliolefinen bestehen, wobei die Dekorschicht und die Schaumstoffschicht im Verbund in eine Spritzgussform eingelegt werden, und diese anschließend mit dem Substratmaterial in der geschlossenen Spritzgussform hinterspritzt werden, und wobei zur Erzielung einer gewünschten Strukturierung der äußeren Oberfläche der Dekorschicht die innere Oberfläche der Spritzgussform, an die die Dekorschicht angelegt wird, komplementär strukturiert wird, anzugeben, das einfacher als das bekannte Verfahren ist und daher einen geringeren apparatemäßigen Aufwand erfordert sowie auch die Herstellung der Kunststoffformteile mit geringerem zeitlichen Aufwand gestattet.

Diese Aufgabe wird erfindungsgemäß gelöst durch ein Verfahren mit den Merkmalen des Anspruchs 1. Vorteilhafte Weiterbildungen des erfindungsgemäßen Verfahrens ergeben sich aus den Unteransprüchen.

Dadurch, dass eine Schaumstoffschicht aus geschlossenen Zellen und mit solchen Eigenschaften verwendet wird, dass sie beim Aushärten des Substratmaterials in der geschlossenen Spritzgussform entsprechend der Strukturierung der Oberfläche der Spritzgussform bleibend verdichtet wird, erfolgt die Strukturierung der Oberfläche der Dekorschicht während der Aushärtung des Substratmaterials, so dass der zusätzliche Schritt des Andrückens der Dekorschicht an die Spritzgussform entbehrlich ist.

Nach dem Injizieren des Substratmaterials in die geschlossene Spritzgussform entwickelt dieses Material beim Aushärten vornehmlich an den Stellen hohe Druckkräfte auf die Schaumstoffschicht, an denen der Raum für eine Ausdehnung durch die Erhebungen in der Struktur der Oberfläche der Spritzgussform besonders beschränkt ist. Dies führt dazu, dass, da die der Schaumstoffschicht zugewandte Oberfläche des sich bildenden Substrats im wesentlichen eben ist, die Schaumstoffschicht entsprechend der Strukturierung der Oberfläche der Spritzgussform verdichtet wird. Durch die hohe Druckbeanspruchung findet jedoch eine derartige Schädigung der Schaumstoffschicht statt, dass die Verdichtungen auch nach dem Ende der Beanspruchung, das heißt nach dem Öffnen der Spritzgussform und Entnahme des Formteils aus dieser erhalten bleiben. Das fertige Formteil hat damit eine bleibende Oberflächenstruktur, die komplementär zu der inneren Oberfläche der Spritzgussform ist. Diese bleibende Verformung der Schaumstoffschicht wird nur bei einem Schaum aus geschlossenen Zellen erhalten.

Die Verdichtung der Schaumstoffschicht kann großflächig erfolgen. Es ist somit möglich, Strukturen auf der Oberfläche des Formteils zu erhalten, die sowohl schmale Vertiefungen als auch schmale Erhebungen aufweisen können.

Die Strukturierung der Oberfläche der Spritzgussform kann durch eine entsprechende Gestaltung der Oberfläche selbst erhalten werden. Dies ist vorteilhaft, wenn mit der Spritzgussform nur gleiche Formteile hergestellt werden sollen. Soll dagegen die Spritzgussform zur Herstellung von Formteilen mit unterschiedlicher Oberflächenstruktur verwendet werden, empfiehlt es sich, die Strukturierung der Oberfläche der Spritzgussform durch entsprechend geformte Einsätze zwischen der Oberfläche der Spritzgussform und der Dekorschicht zu erhalten. Durch Auswechseln der Einsätze kann somit leicht die Oberflächenstruktur der Formteile geändert werden.

Als Material für die Einsätze wird vorzugsweise das Material gewählt, aus dem die Spritzgussform besteht, d.h. insbesondere Aluminium oder Stahl. Es kann aber auch ein Polyolefin wie Polyäthylen oder Polypropylen verwendet werden, das eine Talkumbeimischung enthält.

Die Dicke der unverdichteten Schaumstoffschicht liegt üblicherweise im Bereich von 2 bis 6 mm, so dass die maximalen Höhendifferenzen der erhaltenen Oberflächenstruktur geringfügig unter diesen Werten liegen.

Das Recycling der hergestellten Formteile lässt sich auf einfache Weise durchführen, wenn alle drei Bestandteile - Dekorschicht, Schaumstoffschicht, Substrat - aus dem gleichen Kunststoff wie einem Polyolefin bestehen. Besonders vorteilhafte Eigenschaften hat Polypropylen.

Andere geeignete Materialien für die Dekorschicht sind PET-Gewebe und für das Substrat natürliche Fasern oder ABS.

Die Injektion des Substratmaterials sollte möglichst unter geringem Druck, beispielsweise 60 bar, erfolgen. Hierdurch wird verhindert, dass die Schaumstoffschicht auch an den Injektionsstellen bleibend verdichtet wird, und sich so an diesen Stellen unerwünschte Vertiefungen in der Struktur der Formteiloberfläche ergeben.

Die Erfindung wird im folgenden anhand eines in den Figuren dargestellten Ausführungsbeispiels näher erläutert. Es zeigen:
- Figur 1: in drei Stufen den Ablauf des Verfahrens zum Herstellen eines hinterspritzten Kunststoffformteils, und
- Figur 2: einen Schnitt durch die Dekorschicht, die Schaumstoffschicht und einen Teil des Substrats eines nach dem erfindungsgemäßen Verfahren hergestellten Kunststoffformteils.

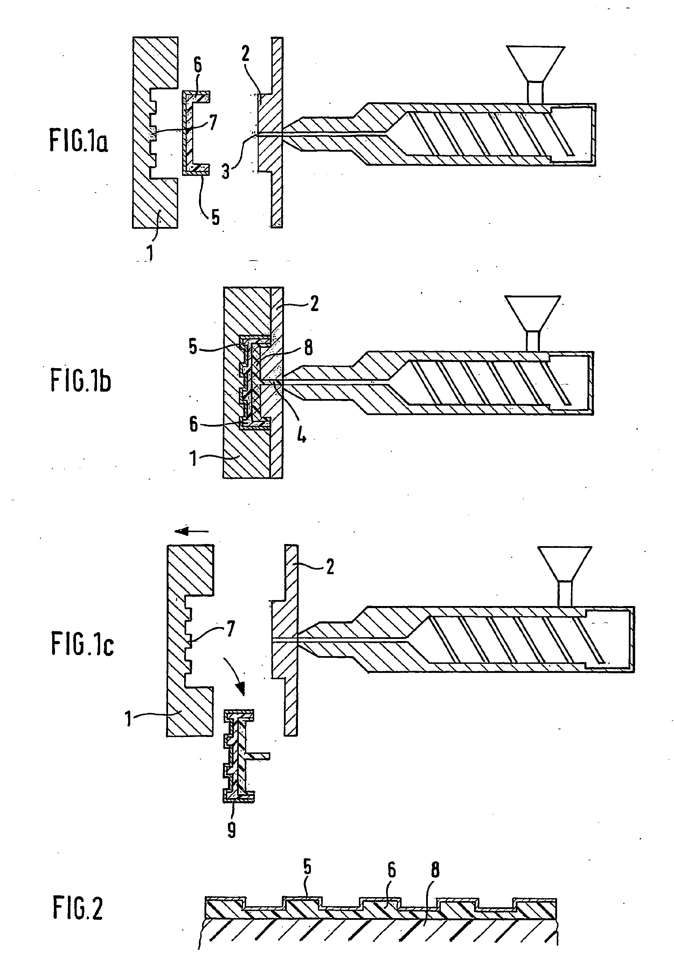

Figur 1 zeigt das bekannte Hinterspritzverfahren mit einer Spritzgussform aus einer Matrize 1 und einer Patrize 2. Die Patrize 2 enthält Injektionsbohrungen 3 für das Einspritzen des fluiden Substratmaterials 4 in die geschlossene Spritzgussform (Schritt B). Bevor die Spritzgussform geschlossen wird, wird der vorhergebildete Verbund aus der dünnen Dekorschicht 5 und der Schaumstoffschicht 6, die eine konstante Dicke im Bereich von 2 bis 4 mm hat, mit der Dekorschicht 5 an der Formoberfläche anliegend in die Matrize 1 eingelegt (Schritt A). Die der Dekorschicht 5 zugewandte Oberfläche ist strukturiert, wie durch Erhebungen 7 angedeutet ist. Diese Strukturierung wird durch eine entsprechende Ausbildung der Oberfläche der Matrize 1 selbst oder durch die Erhebungen 7 bildende Einsätze, die bei Bedarf ausgewechselt werden können, erhalten.

Nach dem Einsetzen der Dekorschicht 5 und der Kunststoffschicht 6 wird die Spritzgussform geschlossen und das Substratmaterial 4 wird bei einer Temperatur von beispielsweise 190 Grad Celsius injiziert (Schritt B). Dieses härtet anschließend aus und übt dabei einen Druck auf die umgebenden Oberflächen aus. Dieser Druck ist dort am höchsten, wo durch die Erhebungen 7 der freie Raum für die Ausbildung des Substrats 8 am stärksten eingeengt ist. Die Verfahrensparameter sind so eingestellt, dass trotz der Erhebungen 7 die der Schaumstoffschicht 6 zugewandte Oberfläche des sich ausbildenden Substrats 8 im wesentlichen eben ist; mit der Folge, dass die Schaumstoffschicht 6 im Bereich der Erhebungen 7 entsprechend verdichtet wird. Weiterhin sind die Verfahrensparameter so gewählt, dass der Druck des Substratmaterials 4 auf die aus geschlossenen Zellen bestehende Schaumstoffschicht 6 im Bereich der Verdichtungen so groß ist, dass diese Verdichtungen auch nach Entlastung der Schaumstoffschicht 6 erhalten bleiben und somit eine bleibende Strukturierung der von der Dekorschicht 5 gebildeten Oberfläche des ausgehärteten und aus der geöffneten Spritzgussform entnommenen Formteils 9 (Schritt C) erzielt wird.

Figur 2 zeigt einen Schnitt durch einen Teil des Formteils 9, aus dem die Strukturierung der von dem Verbund aus Dekorschicht 5 und Schaumstoffschicht 6 gebildeten Oberfläche ersichtlich ist. Die aus einander abwechselnden Stegen und Vertiefungen bestehende Strukturierung wird durch entsprechende bleibende Verdichtung der ursprünglich eine konstante Dicke aufweisenden Schaumstoffschicht 6 im Bereich der Vertiefungen erhalten.

## Patentansprüche

1. Verfahren zum Herstellen von hinterspritzten Kunststoffformteilen (9) aus einer Dekorschicht (5), einer Schaumstoffschicht (6) und einem Substrat (8), die jeweils aus Polyolefinen bestehen, wobei die Dekorschicht (5) und die Schaumstoffschicht (6) im Verbund in eine Spritzgussform (1, 2) eingelegt werden und die Schaumstoffschicht (6) anschließend mit dem Substratmaterial (4) in der geschlossenen Spritzgussform (1, 2) direkt hinterspritzt wird, und wobei zur Erzielung einer gewünschten Strukturierung der äußeren Oberfläche der Dekorschicht (5) die innere Oberfläche der Spritzgussform (1, 2), an die die Dekorschicht (5) angelegt wird, komplementär strukturiert wird, wobei eine Schaumstoffschicht (6) aus geschlossenen Zellen und mit solchen Eigenschaften verwendet wird, dass sie beim Aushärten des Substratmaterials (4) in der geschlossenen Spritzgussform (1, 2) entsprechend der Strukturierung der Oberfläche der Spritzgussform (1, 2) bleibend verdichtet wird.

2. Verfahren nach Anspruch 1, **dadurch gekennzeichnet, dass** die Strukturierung der Oberfläche der Spritzgussform (1, 2) durch entsprechende Gestaltung der Oberfläche selbst erhalten wird.

3. Verfahren nach Anspruch .1, **dadurch gekennzeichnet, dass** die Strukturierung der Oberfläche der Spritzgussform (1, 2) durch entsprechend geformte Einsätze zwischen der Oberfläche der Spritzgussform (1, 2) und der Dekorschicht (5) erhalten wird.

4. Verfahren nach Anspruch 3, **dadurch gekennzeichnet, dass** die Einsätze aus dem Material der Spritzgussform (1, 2) bestehen.

5. Verfahren nach Anspruch 3, **dadurch gekennzeichnet, dass** die Einsätze aus einem mit Talkum versetzten Polyolefin bestehen.

6. Verfahren nach einem der Ansprüche 1 bis 5, **dadurch gekennzeichnet, dass** die Dicke der unverdichteten Schaumstoffschicht (6) im Bereich von 2 bis 6 mm liegt.

7. - Verfahren nach einem der Ansprüche 1 bis 6, **dadurch gekennzeichnet, dass** die Höhendifferenzen der Struktur der Dekorschicht (5) kleiner als die Dicke der unverdichteten Schaumstoffschicht (6) sind.

8. Verfahren nach einem der Ansprüche 1 bis 7, **dadurch gekennzeichnet, dass** eine Dekorschicht (5), eine Schaumstoffschicht (6) und ein Substrat (8) jeweils aus einem Polyolefin verwendet werden.

9. Verfahren nach einem der Ansprüche 1 bis 8, **dadurch gekennzeichnet, dass** die Injektion des Substratmaterials (4) in die Spritzgussform (1, 2) unter geringem Druck erfolgt.

10. Verfahren nach Anspruch 9, **dadurch gekennzeichnet, dass** die Injektion des Substratmaterials (4) bei einem Druck von etwa 60 bar erfolgt.

## Claims

1. Procedure for the production of back-injected plastic form parts (9) consisting of one decor layer (5), a foamed material layer (6) and a substrate (8), each consisting of polyolefin, with the decor layer (5) and the foamed material layer (6) being inserted into the injection machine (1, 2) in composition and the foamed material layer (6) then being back-injected with the substrate material (4) directly into the injection mould (1, 2), and with the inner surface of the injection mould (1, 2), which the decor layer (5) is lying against, being structured complementary in order to achieve the desired structuring of the outer surface of the decor layer (5), with a foamed material layer (6) being used that consists of closed cells and is **characterised in that** it is densified permanently when the substrate material (4) hardens in the closed injection mould (1, 2) according to the structuring of the surface of the injection mould (1, 2).

2. Procedure according to claim 1, **characterised in that** the structuring of the surface of the injection mould (1, 2) is achieved through the respective forming of the surface itself.

3. Procedure according to claim 1, **characterised in that** the structuring of the surface of the injection mould (1, 2) is achievedthrough respectively formed inserts between the surface of the injection mould (1, 2) and the decor layer (5).

4. Procedure according to claim 3, **characterised in that** the inserts are made of the same material as the injection mould (1, 2).

5. Procedure according to claim 3, **characterised in that** the inserts consist of a polyolefin containing talcum.

6. Procedure according to one of the claims 1 to 5, **characterised in that** the undensified foamed material layer (6) is between 2 and 6 mm.

7. Procedure according to one of the claims 1 to 6, **characterised in that** the height differences of the structure of the decor layer (5) are smaller than the thickness of the undensified foamed material layer (6).

8. Procedure according to one of the claims 1 to 7, **characterised in that** a decor layer (5), a foamed material layer (6) and a substrate (8), each consisting of a polyolefin, are used.

9. Procedure according to one of the claims 1 to 8, **characterised in that** the injection of the substrate material (4) into the injection mould (1, 2) is carried out under slight pressure.

10. Procedure according to claim 9, **characterised in that** the injection of the substrate material (4) is carried out at a pressure of approximately 60 bar.

## Revendications

1. Procédé pour la production de parties de moule rétro-injectées (9) consistant d'une couche de décor (5), d'une couche mousseuse (6) et un substrat (8), dont chacun consiste de polyoléfines, la couche de décor (5) et la couche mousseuse étant mises dans un moule d'injection (1, 2) en composition et après, la couche mousseuse (6) étant rétro-injectée directement dans le moule d'injection (1, 2) avec le matériel de substrat (4), et la surface intérieure du moule d'injection (1, 2), à laquelle la couche de décor (5) est ajustée, étant structurée complémentairement afin d'obtenir la structuration désirée de la surface extérieure de la couche de décor (5), une couche mousseuse (6) consistant de cellules fermés étant utilisée et ayant des telles caractéristiques qu'elle est densifié persistamment dans le moule d'injection (1, 2) selon la structuration de la surface du moule d'injection (1,2) quand le matériel de substrat (4) durcit.

2. Procédé selon la revendication 1, **caractérisé en ce que** la structuration de la surface du moule d'injection (1, 2) est obtenue par la formation correspondante de la surface elle-même.

3. Procédé selon la revendication 1, **caractérisé en ce que** la structuration de la surface du moule d'injection (1, 2) est obtenue par des inserts correspondamment formés entre la surface du moule d'injection (1, 2) et la couche de décor (5).

4. Procédé selon la revendication 3, **caractérisé en ce que** les inserts consistent du même matériel que le moule d'injection (1,2)

5. Procédé selon la revendication 3, **caractérisé en ce que** les inserts consistent d'une polyoléfine entremêlée avec talc en poudre.

6. Procédé selon une des revendications 1 à 5, **caractérisé en ce que** la couche mousseuse non densifiée (6) est entre 2 et 6 mm fort.

7. Procédé selon une des revendications 1 à 6, **caractérisé en ce que** les différence de hauteur de la structure de la couche de décor (5) sont plus petites que l'épaisseur de la couche mousseuse non densifiée (5).

8. Procédé selon une des revendications 1 à 7, **caractérisé en ce qu'**une couche de décor (5), une couche mousseuse (6) et un substrat sont utilisés, chacun consistant d'une polyoléfine.

9. Procédé selon une des revendications 1 à 8, **caractérisé en ce que** l'injection du matériel de substrat (4) dans le moule d'injection (1, 2) a lieu sous une pression faible.

10. Procédé selon la revendication 9, **caractérisé en ce que** l'injection du matériel de substrat (4) a lieu sous une pression d'environ 60 bar.
